# EUROPÄISCHE PATENTSCHRIFT

(11) **EP 0 969 985 B1**
(45) Veröffentlichungstag und Bekanntmachung des Hinweises auf die Patenterteilung: **14.08.2002**
(21) Anmeldenummer: 99903665.0
(22) Anmeldetag: 21.01.1999
(51) Int. Cl.: B60Q 1/26, F21S 8/10, F21V 17/00

(54) **LEUCHTE FÜR FAHRZEUGE, INSBESONDERE HECKLEUCHTE FÜR FAHRZEUGE**
LIGHT FOR VEHICLES, ESPECIALLY REAR LIGHT FOR VEHICLES
FEU POUR VEHICULES, NOTAMMENT FEU ARRIERE POUR VEHICULES

(30) Priorität: 27.01.1998 DE 19802923
(43) Veröffentlichungstag der Anmeldung: 12.01.2000
(73) Patentinhaber: Hella KG Hueck & Co., 59552 Lippstadt (DE)
(72) Erfinder: REINBACH, Martin, Howick, Auckland (NZ)
(86) Internationale Anmeldenummer: EP9900385
(87) Internationale Veröffentlichungsnummer: WO9937502

(56) Entgegenhaltungen:
- EP-A- 0 604 306
- WO-A-98/13229
- FR-A- 1 598 828
- GB-A- 850 681

## Beschreibung

Die Erfindung betrifft eine Leuchte für Fahrzeuge, insbesondere Heckleuchte für Fahrzeuge, mit einem Gehäuse, in welchem mindestens eine Lichtquelle angeordnet ist und welches ein rückwärtiges Grundteil und ein vorderes Abschlußteil aufweist, und mit mindestens einer in den Grundteil eingebrachten Befestigungsöffnung für ein bolzenartiges Befestigungsmittel, durch welches das Grundteil am Fahrzeug festsetzbar ist.

Eine solche Leuchte für Fahrzeuge ist aus der gattunsgemäßen DE 34 31 647 C2 bekannt. Die Leuchte ist, von ihrer Vorderseite her gesehen, rechteckförmig gestaltet und weist mehrere Signalfunktionen auf. Das mehrere Leuchtenkammern aufweisende Gehäuse der Leuchte ist aus einem rückwärtigen Grundteil und einem vorderen Abschlußteil zusammengesetzt. Das Abschlußteil ist eine lichtdurchlässige Lichtscheibe, welche mit ihrem äußeren umlaufenden Rand dicht an dem vorderen Rand des Grundteils anliegt. Das Abschlußteil ist mittels Befestigungsschrauben lösbar mit dem Grundteil verbunden. In den Grundteil sind Befestigungsöffnungen für bolzenartige Befestigungsmittel eingebracht. Als bolzenartige Befestigungsmittel dienen Schrauben, welche mit ihrem Kopf im Inneren des Gehäuses an einer Anlagefläche des Grundteils anliegen. Nach einem Befestigen der Leuchte an einer Außenfläche des Fahrzeuges liegt das Grundteil mit seiner Rückseite an dem Fahrzeug an. Durch die Befestigungsschrauben ist das Grundteil der Leuchte sehr fest mit dem Fahrzeug verbindbar. Sind die bolzenartigen Befestigungsmittel bei der Befestigung der Leuchte am Fahrzeug nur auf der Vorderseite des Grundteils zugänglich, so muß das Abschlußteil vom Grundteil gelöst werden. Dabei können innere Bauteile der Leuchte beschädigt werden, und ein dichtes Zusammenfügen von Grundteil und Abschlußteil ist nicht sicher.

Bei der aus der DE 39 16 875 A1 bekannten Leuchte für Fahrzeuge ist das Grundteil platten- und rechteckförmig ausgeführt. Auf den Grundteil ist eine plattenförmige Trägerplatte für Lichtquellen angeordnet. Als Lichtquellen dienen Leuchtdioden. Auf den Grundteil ist ein schalenförmiges Abschlußteil, welches eine Lichtscheibe ist, aufgesetzt. Zwischen den Lichtquellen und der Abschlußscheibe ist eine mit optischen Elementen besetzte Zwischenscheibe angeordnet. Die optischen Elemente der Zwischenscheibe bündeln das Licht, während optische Elemente der Lichtscheibe des Abschlußteils das Licht streuen. Leuchten, deren Lichtquellen von Leuchtdioden gebildet sind, weisen oftmals ein dichtes Gehäuse auf, wobei das Grundteil und das Abschlußteil unlösbar miteinander verbunden sind. Eine solche Leuchte ist nicht von der Vorderseite her an einem Fahrzeug festsetzbar.

Die aus der EP 0 340 080 B2 bekannte Leuchte für Fahrzeuge weist bolzenartige Befestigungsmittel auf, welche fest mit dem Grundteil verbunden sind. Diese Leuchte kann nur dann am Fahrzeug festgesetzt werden, wenn ihre bolzenartigen Befestigungsmittel am Fahrzeug auf der Rückseite der Leuchte zugänglich sind.

Aus der DE 33 00 383 A1 ist eine Leuchte für Fahrzeuge bekannt geworden, bei der das Grundteil und das Abschlußteil unlösbar miteinander verbunden sind. Damit die Leuchte auch von ihrer Vorderseite her am Fahrzeug festsetzbar ist, geht eine Befestigungsöffnung sowohl durch das Abschlußteil als auch das Grundteil hindurch. Als bolzenartiges Befestigungsmittel dient eine Schraube, welche, mit ihrem Kopf versenkt, in der Befestigungsöffnung des Abschlußteils angeordnet ist und mit ihrem Schaft durch die Befestigungsöffnung des Abschlußteils und des Grundteils hindurch führt. Da das Abschlußteil eine Lichtscheibe ist und Lichtscheiben oftmals aus einem spröden Material bestehen, können beim Befestigen der Leuchte am Fahrzeug Spannungsrisse in der Lichtscheibe entstehen.

Eine Leuchte für Fahreuge, welche in der nicht vorveröffentlichten WO 98/13229 A beschrieben und dargestellt ist, weist ein aus einem Grundteil und einem Abdeckteil bestehendes Gehäuse auf. In dem Grundteil ist eine Befestigungsöffnung für ein bolzenartiges Befestigungselemlent eingebracht, durch welches das Grundteil am Fahrzeug festsetzbar ist. Das Abschlussteil weist mindestens einen offenen Bereich auf, dessen Randabschnitt an dem Grundteil anliegt. Der offene Bereich ist durch eine Abdeckung verschlossen, die durch Einrasten von Rastelementen einer Haltevorrichtung hinter einer dem Gehäuse zugewandten Fläche des Abschlussteils an dem Abschlussteil halterbar ist.

Aufgabe der Erfindung ist es, die im Oberbegriff des Anspruchs 1 beschriebene Leuchte für Fahrzeuge derart zu gestalten, daß ein Befestigen der Leuchte am Fahrzeug von ihrer Vorderseite her auch dann möglich ist, wenn
a) das Abschlußteil nicht vom Grundteil abgenommen werden muß,
b) keine Befestigungskräfte des Befestigungsmittels auf den Abschlußteil wirken,
c) auf der Vorderseite der Leuchte ausreichend Raum zur Montage des Befestigungsmittels besteht und
d) das Befestigungsmittel nach der Monfage der Leuchte abgedeckt ist und die Abdeckung möglichst sicher am Gehäuse gehalten ist,
e) eine zum Inneren des Gehäuses hin führende Durchgangsöffnung für eine elektrische Zuleitung gegen Schmutz und Spritzwasser geschützt angeordnet ist.

Diese Aufgabe wird nach der Erfindung dadurch gelöst, daß
- das Abschlußteil mindestens einen offenen Bereich aufweist, dessen Randabschnitt zu einer für das Befestigungsmittel dienenden Anlagefläche des Grundteils beabstandet verläuft und an dem Grundteil anliegt,
- der offene Bereich des Abschlußteils durch eine Abdeckung verschlossen ist, zwischen der und dem Gehäuse eine lösbare Haltevorrichtung besteht,
- in dem von dem offenen Bereich des Abschlußteils freigelassenen Bereich des Grundteils eine Durchgangsöffnung für eine elektrische Zuleitung eingebracht ist, welche in dem von dem Grundteil, dem Abschlußteil und der Abdeckung gebildeten Raum durch eine Eingangsöffnung des Gehäuses in das Innere des Gehäuses führt.
Das bolzenartige Befestigungsmittel kann den Grundteil mit einer großen Haltekraft am Fahrzeug festsetzen, da das Befestigungsmittel nur am Grundteil der Leuchte anliegt. Die Zugänglichkeit der Befestigungsöffnung und des Befestigungsmittels ist sehr gut, da der offene Bereich des Abschlußteils einen ausreichend großen Montageraum schafft. Die Abdeckung ist auch bei einer Stoßbelastung sicher an dem Abschlußteil gehalten, da sie in dem offenen Bereich des Abschlußteils angeordnet ist. Die Eingangsöffnung in dem Gehäuse ist geschützt gegen Schmutz und Spritzwasser, da sie in dem Raum angeordnet ist, welcher von dem Grundteil, dem Abschlußteil und der Abdeckung gebildet ist. Weiterhin kann vor dem Anbringen der Leuchte an dem Fahrzeug die Stelle leicht markiert werden, in welcher eine Durchgangsbohrung für die elektrische Zuleitung in das Fahrzeug einzubringen ist.

Die in das Grundteil eingebrachte Befestigungsöffnung ist besonders gut zugänglich, wenn der offene Bereich des Abschlußteils von einer Einbuchtung gebildet ist, welche sich vom äußeren Rand des Grundteils nach innen hin erstreckt. Außerdem weist das Abschlußteil durch die Einbuchtung eine hohe Steifigkeit auf, wenn das Abschlußteil schalenförmig ausgeführt ist und die äußere Seitenwand mit einem Randabschnitt den offenen Bereich begrenzt. Dabei weist das Abschlußteil mit der äußeren Seitenwand und dem die Einbuchtung begrenzenden Randabschnitt einen umlaufenden äußeren Rand auf, welcher dicht mit dem Grundteil verbindbar ist. Der Rand kann in ein umtaufendes Aufnahmebett des Grundteils eingreifen und in dem Aufnahmebett dicht mit dem Grundteil verklebt sein. Die Leuchte ist besonders sicher an dem Fahrzeug festsetzbar, wenn das Abschlußteil auf sich gegenüberliegenden seitlichen Randbereichen jeweils einen offenen Bereich aufweist.

Der Zusammenbau von Grundteil und Abschlußteil ist einfach und leicht, wenn die Eingangsöffnung durch die sich benachbarten Ränder des Grundteils und des offenen Bereichs des Abschlußteils gebildet ist. Hierbei ist es nicht notwendig, die elektrische Zuleitung vor dem Zusammenfügen des Grund- und Abschlußteils durch die Eingangsöffnung hindurchzufädeln. Das Gehäuse ist durch einfache Art und Weise auch im Bereich der Eingangsöffnung für die elektrische Zuleitung dicht auszuführen, wenn das Abschlußteil mit dem Grundteil und die Ränder der Eingangsöffnung des Grundteils mit der elektrischen Zuleitung dicht verklebt sind, wobei in der Eingangsöffnung eine die Zuleitung umgebende Zugentlastung in der Eingangsöffnung festsitzend gehalten ist. Dadurch ist das Gehäuse im Bereich der Eingangsöffnung nicht nur dicht ausgeführt, sondern die elektrische Zuleitung ist auch bei Zugbelastung sicher an dem Gehäuse gehalten.

Die Leuchte weist auf ihrer Vorderseite im Bereich der Abdeckung keine scharfen Ecken und Kanten auf, durch welche eine Verletzungsgefahr besteht, wenn die Abdeckung mit ihrer Außenfläche bündig zur angrenzenden Außenfläche des Abschlußteils verläuft. Hierbei ist es weiterhin zweckmäßig, wenn die zwischen der Abdeckung und dem Gehäuse bestehende Haltevorrichtung zumindest durch Rastelemente zwischen der Abdeckung und dem Abschlußteil gebildet ist. Durch die Rastelemente aufweisende Haltevorrichtung ist die Abdeckung selbsttätig an dem Gehäuse festsetzbar und mittels eines Hilfswerkzeuges selbsttätig lösbar. Die Abdeckung kann leicht und einfach mittels eines Hilfswerkzeuges aus ihrer rastenden Verbindung mit dem Gehäuse gelöst werden. Dabei ist das Hilfswerkzeug zwischen die Abdeckung und den Abschlußteil einzuführen.

Damit der von dem offenen Bereich des Abschlußteils freigelassene Bereich des Grundteils weder durch die Abdeckung noch durch das Abschlußteil hindurch zu sehen sind, ist es vorteilhaft, wenn sowohl das Abschlußteil, zumindest in einem einen offenen Bereich aufweisenden Randbereich, als auch die Abdeckung undurchsichtig gestaltet ist, wobei das Abschlußteil angrenzend an den undurchsichtigen Randbereich eine lichttechnisch wirksame Lichtscheibe aufweist. Die Abdeckung und der den offenen Bereich aufweisende Randbereich des Abschlußteils kann aus einem opaken Kunststoff gespritzt sein bzw. auf der Innenseite mit einer opaken Beschichtung versehen sein.

Bei einer Leuchte mit einem plattenförmigen Grundteil und mit einer Trägerplatte für Miniaturlichtquellen ist es weiterhin vorteilhaft, wenn die Trägerplatte mit einem Abschnitt sich bis unterhalb eines undurchsichtig gestalteten Randbereichs des Abschlußteils erstreckt und seitlich eines offenen Bereiches des Abschlußteils angeordnet ist, wobei der Abschnitt der Trägerplatte elektronische Komponenten zur Spannungsversorgung der Lichtquellen trägt. Dadurch sind die elektronischen Komponenten nicht von der Vorderseite der Leuchte her zu sehen, und die elektronischen Komponenten benötigen keinen gesonderten Raum, welcher die Leuchte vergrößert. Im Inneren des Gehäuses sind zwischen der Zuleitung und den elektronischen Komponenten nur kurze elektrische Leitungen notwendig, wenn die elektronischen Komponenten zu dem freigelassenen Bereich des Grundteils benachbart angeordnet sind, welcher eine Befestigungsöffnung für ein Befestigungsmittel und eine Durchgangsöffnung für die elektrische Zuleitung aufweist.

Weiterhin ist es vorteilhaft, wenn an den Abschlußteil Trennwände angebracht sind, welche zwischen den einen offenen Bereich aufweisenden undurchsichtigen Randbereichen und der lichtdurchlässigen Lichtscheibe verlaufen und welche einen Raum zur Aufnahme einer mit optischen Elementen besetzten Zwischenscheibe begrenzen und die Trägerplatte der Lichtquellen an dem Grundteil halten. Die Trennwände trennen den mit einem offenen Bereich der Abschlußscheibe versehenen Raum und den die Lichtquellen aufnehmenden Raum. Die Trennwände können lichtundurchlässig gestaltet sein, damit die die offenen Bereiche bildenden Räume des Abschlußteils nicht durch die Lichtquellen unerwünscht aufgehellt werden können.

Zwei Ausführungsbeispiele nach der Erfindung sind in der Zeichnung dargestellt, und zwar zeigen
Figur 1 in einer perspektivischen Ansicht mehrere Einzelteile einer Leuchte für Fahrzeuge vor ihrem Zusammenbau;
Figur 2 in einem Schnitt nach der Linie A-A in Figur 1 ein Abschlußteil und ein Grundteil der Leuchte vor dem Zusammenbau und
Figur 3 in einer Draufsicht eine andere Leuchte für Fahrzeuge.

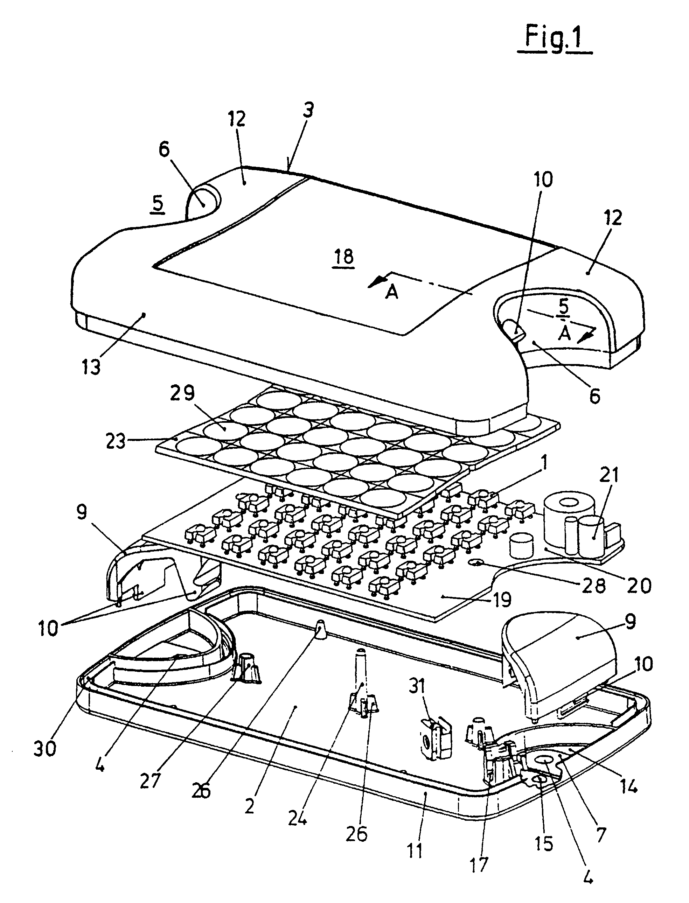

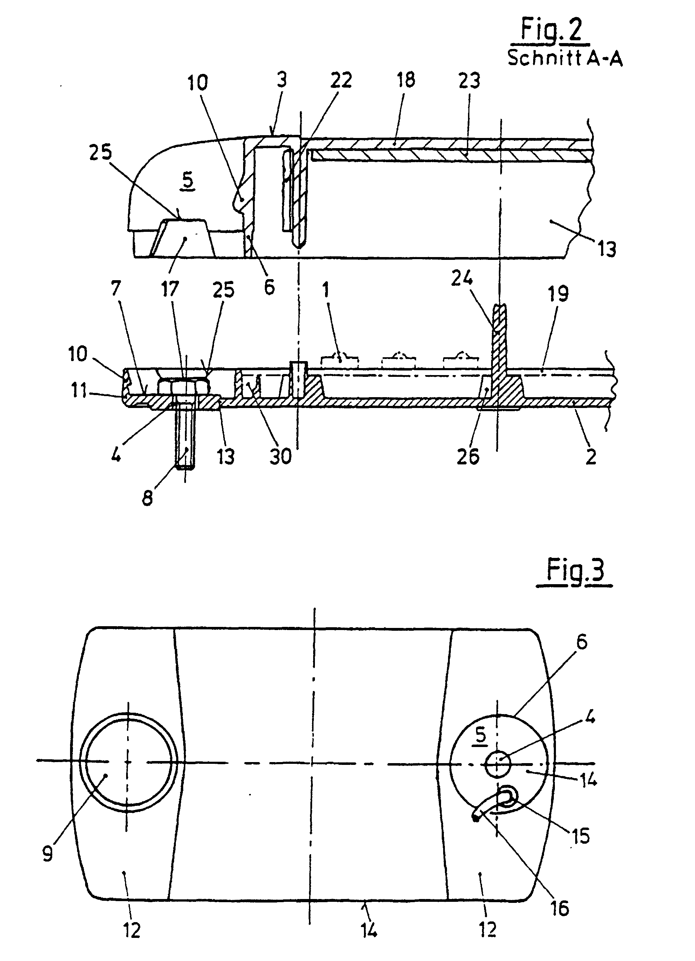

Die Figuren 1 und 2 zeigen eine am Heck des Fahrzeugs anbringbare Leuchte. Die Leuchte weist ein aus Kunststoff bestehendes plattenförmiges Grundteil (2) auf, an dessen Innenseite Vorsprünge (26) angeformt sind. An dem freien Ende der Vorsprünge (26) liegt die plattenförmige Trägerplatte (19) der Lichtquellen (1) an. Die Trägerplatte (19) ist eine Leiterplatte, und die Lichtquellen (1) sind Leuchtdioden. An der Innenseite des Grundteils (2) sind weiterhin Fixierungsvorsprünge (27) angeformt, welche in entsprechend große Fixierungsöffnungen (28) der Trägerplatte (19) eingreifen. Die Trägerplatte (19) weist einen seitlich abstehenden Abschnitt (20) auf, welcher elektronische Komponenten (21) zur geregelten Spannungsversorgung der Lichtquellen (1) trägt. Ferner ist an die Innenseite des Grundteils (2) ein Haltevorsprung (24) angeformt, welcher durch eine Öffnung der Trägerplatte (19) hindurchführt und mit seinem freien Ende eine Zwischenscheibe (23) an der Innenseite eines Abschlußteils (3) hält. Die Zwischenscheibe (23) ist mit das Licht der Lichtquellen (1) bündelnden optischen Elementen (29) besetzt. Die Zwischenscheibe (23) liegt an einem Bereich des Abschlußteils (3) an, welcher eine lichtdurchlässige Lichtscheibe (18) ist. Die Lichtscheibe (18) ist auf ihrer Innenseite mit das Licht streuenden optischen Elementen (nicht dargestellt) besetzt. Der Abschlußteil (3) ist rechteckförmig gestaltet und weist auf den kurzen Seiten des Rechtecks jeweils einen offenen Bereich (5) auf. Der Bereich (5) ist durch einen seitlichen Randabschnitt (6) des Abschlußteils (3) begrenzt. Die Randabschnitte (6) der beiden offenen Bereiche (5) bilden zusammen mit den Seitenwänden (13) der langen Seiten des Rechtecks einen umlaufenden Rand des schalenförmigen Abschlußteils (3). Der umlaufende Rand des Abschlußteils (3) ist in ein umlaufendes Aufnahmebett (30) des Grundteils (2) einsetzbar. Das Aufnahmebett (30) dient zur Aufnahme einer Dichtungsmasse, wie z. B. Klebstoff. Dadurch ist das Abschlußteil (3) dicht und unlösbar mit dem Grundteil (2) verbindbar.

Die von den offenen Bereichen (5) freigelassenen Bereiche (14) des Grundteils (2) weisen eine Befestigungsöffnung (4) für ein bolzenartiges Befestigungsmittel (8), welches eine Schraube sein kann, auf. Die Befestigungsöffnung (8) ist auf der nach vorne gerichteten Seite von einer Anlagefläche (7) für das bolzenförmige Befestigungsmittel (8) umgeben. In einen der beiden freigelassenen Bereiche (14) des Grundteils (2) ist eine Durchgangsöffnung (15) für eine elektrische Zuleitung (16) eingebracht. Weiterhin besteht in dem Raum, welcher durch den freigelassenen Bereich (14) des Grundteils (2), dem Randabschnitt (6) des Abschlußteils (3) und einer in den offenen Bereich (5) eingesetzten Abdeckung (9) gebildet ist, eine in das Gehäuse (2 und 3) eingebrachte Eingangsöffnung (17) zum Inneren der Leuchte hin. Die Eingangsöffnung (17) ist durch benachbarte Ränder (25) des Aufnahmebetts (30), des Grundteils (2) und des Randabschnitts (6) des Abschlußteils (3) begrenzt. Nach einem Aufsetzen des Abschlußteils (3) auf das Grundteil (2) greifen die Ränder (25) festsitzend in eine die elektrische Zuleitung (16) umgebende Zugentlastung (31) ein. Die die Eingangsöffnung (17) bildenden Ränder (25) sind dicht mit der Zugentlastung (31) und der elektrischen Zuleitung (16) verklebt. In Fig. 1 ist die Zugentlastung (31) vor dem Einsetzen in die Eingangsöffnung (17) dargestellt.

Die Leuchte kann zum Beispiel an Nutzfahrzeugen nur von der Vorderseite her an dem Nutzfahrzeug befestigt werden. Die durch den offenen Bereich (5) gebildete Einbuchtung des Abschlußteils (3) bildet dabei einen ausreichend großen Montageraum. Nach dem Befestigen der Leuchte an dem Nutzfahrzeug sind die offenen Bereiche (5) des Abschlußteils (3) durch jeweils eine Abdeckung (9) zu verschließen. Die Abdeckungen (9) sind aus opakem Kunststoff hergestellt und sind mittels Rastelementen einer Haltevorrichtung (10) sowohl an dem Randabschnitt (6) des Abschlußteils (3) als auch an dem freien Rand des freigelassenen Bereiches (14) selbsttätig festsetzbar. Die Abdeckungen (9) können mittels eines Hilfswerkzeuges leicht aus ihrer Rastverbindung mit dem Gehäuse (2, 3) gelöst werden. Die Abdeckungen (9) grenzen mit ihrer Außenfläche an den Randabschnitt (6) des Abschlußteils (3) und den äußeren Rand (11) des freigelassenen Bereiches (14) des Grundteils (2) an. Hierbei ist es vorteilhaft, wenn die Außenfläche der Abdeckungen (9) bündig zur angrenzenden Außenfläche des Abschlußteils (3) und der Außenfläche des äußeren Randes (11) des freigelassenen Bereiches (14) des Grundteils (2) verlaufen.

Die offenen Bereiche (5) des Abschlußteils (3) sind in sich gegenüberliegende seitliche Randbereiche (12) des rechteckförmigen Grundteils (2) eingebracht. Die Randbereiche (12) und die sie verbindenden Seitenwände (13) des Abschlußteils (3) sind durch eine opake Beschichtung auf der Innenseite des Abschlußteils (3) undurchsichtig gestaltet. Unterhalb eines der beiden undurchsichtig gestalteten seitlichen Randbereiche (12) des Abschlußteils (3) erstreckt sich seitlich neben einen offenen Bereich (5) die Trägerplatte (19) mit dem die elektronischen Komponenten (21) tragenden Abschnitt (20). An die Innenseite des Abschlußteils (3) sind zwei Trennwände (22) angeformt, welche zwischen den Randbereichen (12) und der Lichtscheibe (18) verlaufen. Die Trennwände (22) können ebenfalls, wie die Seitenwände (13) und die seitlichen Randbereiche (12), undurchsichtig gestaltet sein.

Die Leuchte nach Figur 3 weist gegenüber der Leuchte nach den Figuren 1 und 2 folgenden Unterschied auf: Die in die undurchsichtig gestalteten Randbereiche (12) des Grundteils (3) eingebrachten offenen Bereiche (5) sind von Durchgangslöchern gebildet. Die Randabschnitte (6) der offenen Bereiche (5) liegen mit ihrem umlaufenden freien Rand dicht an dem Grundteil (2) an. Die Abdeckungen (9) grenzen mit ihrem äußeren umlaufenden Rand ausschließlich an den Rand des offenen Bereiches (5) an.

### Bezugszeichenliste

Leuchte für Fahrzeuge, insbesondere Heckleuchte für Fahrzeuge
- 1: Lichtquelle
- 2: Grundteil
- 3: Abschlußteil
- 4: Befestigungsöffnung
- 5: offener Bereich
- 6: Randabschnitt
- 7: Anlagefläche
- 8: Befestigungsmittel
- 9: Abdeckung
- 10: Haltevorrichtung
- 11: äußerer Rand
- 12: seitlicher Randbereich
- 13: Seitenwand
- 14: freigelassener Bereich
- 15: Durchgangsöffnung
- 16: elektrische Zuleitung
- 17: Eingangsöffnung
- 18: Lichtscheibe
- 19: Trägerplatte
- 20: Abschnitt
- 21: elektronische Komponenten
- 22: Trennwände
- 23: Zwischenscheibe
- 24: Haltevorsprung
- 25: Ränder
- 26: Vorsprung
- 27: Fixierungsvorsprünge
- 28: Fixierungsöffnungen
- 29: optische Elemente
- 30: Aufnahmebett
- 31: Zugentlastung

## Patentansprüche

1. Leuchte für Fahrzeuge, insbesondere Heckleuchte für Fahrzeuge, mit einem Gehäuse, in welchem mindestens eine Lichtquelle (1) angeordnet ist und welches ein rückwärtiges Grundteil (2) und ein vorderes Abschlußteil (3) aufweist, und mit mindestens einer in den Grundteil (2) eingebrachten Befestigungsöffnung (4) für ein bolzenartiges Befestigungsmittel (8), durch welches das Grundteil (2) am Fahrzeug festsetzbar ist, **dadurch gekennzeichnet, daß**
- das Abschlußteil (3) mindestens einen offenen Bereich (5) aufweist, dessen Randabschnitt (6) zu einer für das Befestigungsmittel (8) dienenden Anlagefläche (7) des Grundteils (2) beabstandet verläuft und an dem Grundteil (2) anliegt,
- der offene Bereich (5) des Abschlußteils (3) durch eine Abdeckung (9) verschlossen ist, zwischen der und dem Gehäuse (2, 3) eine lösbare Haltevorrichtung (10) besteht,
- in dem von dem offenen Bereich (5) des Abschlußteils (3) freigelassenen Bereich (14) des Grundteils (2) eine Durchgangsöffnung (15) für eine elektrische Zuleitung (16) eingebracht ist, welche in dem von dem Grundteil (2), dem Abschlußteil (3) und der Abdeckung (9) gebildeten Raum durch eine Eingangsöffnung (17) des Gehäuses (2, 3) in das Innere des Gehäuses (2, 3) führt.

2. Leuchte nach Anspruch 1, **dadurch gekennzeichnet, daß** der offene Bereich (5) des Abschlußteils (3) von einer Einbuchtung gebildet ist, welche sich vom äußeren Rand (11) des Grundteils (2) nach innen hin erstreckt.

3. Leuchte nach Anspruch 1, **dadurch gekennzeichnet, daß** der offene Bereich (5) des Abschlußteils (3) von einer Durchgangsöffnung in einem seitlichen Randbereich (12) des Abschlußteils (3) gebildet ist.

4. Leuchte nach einem der Ansprüche 1 bis 3, **dadurch gekennzeichnet, daß** das Abschlußteil (3) auf sich gegenüberliegenden seitlichen Randbereichen (12) jeweils einen offenen Bereich (5) aufweist.

5. Leuchte nach einem der Ansprüche 1 bis 4, **dadurch gekennzeichnet, daß** die Eingangsöffnung (17) durch die sich benachbarten Ränder (25) des Grundteils (2) und des offenen Bereiches (5) des Abschlußteils (3) gebildet ist.

6. Leuchte nach Anspruch 5, **dadurch gekennzeichnet, daß** das Abschlußteil (3) mit dem Grundteil (2) und die Ränder der Eingangsöffnung (17) des Grundteils (2) und des Abschlußteils (3) mit der elektrischen Zuleitung (16) dicht verklebt sind, wobei in der Eingangsöffnung (17) eine die Zuleitung (16) umgebende Zugentlastung (31) in der Eingangsöffnung (17) festsitzend gehalten ist.

7. Leuchte nach einem der Ansprüche 1 bis 6, **dadurch gekennzeichnet, daß** die Abdeckung (9) mit ihrer Außenfläche bündig zur angrenzenden Außenfläche des Abschlußteils (3) verläuft.

8. Leuchte nach einem der Ansprüche 1 bis 7, **dadurch gekennzeichnet, daß** die zwischen der Abdeckung (9) und dem Gehäuse (2, 3) bestehende Haltevorrichtung (10) zumindest durch Rastelemente zwischen der Abdeckung (9) und dem Abschlußteil (3) gebildet ist.

9. Leuchte nach einem der Ansprüche 1 bis 8, **dadurch gekennzeichnet, daß** sowohl das Abschlußteil (3), zumindest in einem einen offenen Bereich (5) aufweisenden Randbereich (12), als auch die Abdeckung (9) undurchsichtig gestaltet sind, wobei das Abschlußteil (3) angrenzend an den undurchsichtigen Randbereich (12) eine lichttechnisch wirksame Lichtscheibe (18) aufweist.

10. Leuchte mit einem plattenförmigen Grundteil (2) und mit einer Trägerplatte (19) für Miniaturlichtquellen (1) nach einem der Ansprüche 1 bis 9, **dadurch gekennzeichnet, daß** die Trägerplatte (19) mit einem Abschnitt (20) sich bis unterhalb eines undurchsichtig gestalteten Randbereichs (12) des Abschlußteils (3) erstreckt und seitlich eines offenen Bereiches (5) des Abschlußteils (3) angeordnet ist, wobei der Abschnitt (20) der Trägerplatte (19) elektronische Komponenten (21) zur Spannungsversorgung der Lichtquellen (1) trägt.

11. Leuchte nach Anspruch 10, **dadurch gekennzeichnet, daß** die elektronischen Komponenten (21) zu dem freigelassenen Bereich (14) des Grundteils (12) benachbart angeordnet sind, weicher eine Befestigungsöffnung (4) für ein Befestigungsmittel (8) und eine Durchgangsöffnung (15) für eine elektrische Zuleitung (16) aufweist.

12. Leuchte nach Anspruch 10 oder 11, **dadurch gekennzeichnet, daß** an die Innenseite des Anschlußteils (3) Trennwände (22) angeformt sind, welche zwischen dem einen offenen Bereich (5) aufweisenden undurchsichtigen Randbereich (12) und der lichtdurchlässigen Lichtscheibe (18) verlaufen und welche zwischen sich einen Raum zur Aufnahme einer mit optischen Elementen (29) besetzten Zwischenscheibe (23) begrenzen und die Trägerplatte (19) der Lichtquellen (1) an dem Grundteil (2) haltern.

## Claims

1. A light for vehicles, in particular a rear light for vehicles, having a housing, in which at least one light source (1) is disposed and which comprises a rear base component (2) and a front closing component (3), and having at least one fixing aperture (4) made in the base component (2) for bolt-like fixing means (8), by means of which the base component (2) can be fixed to the vehicle, **characterized in that**
- the closing component (3) has at least one open area (5), the peripheral portion (6) of the latter extending in spaced relationship to a locating face (7) of the base component (2), which serves for the fixing means (8), and resting against the base component (2),
- the open area (5) of the closing component (3) is closed by a cover (9), between which cover and the housing (2, 3) there is a detachable retaining device (10),
- in the area (14) of the base component (2), left exposed by the open area (5) of the closing component (3), a through opening (15) is provided for an electric supply line (16), which, in the space formed by the base component (2), the closing component (3) and the cover (9), runs through an opening (17) in the housing (2, 3) into the interior of the housing (2, 3).

2. A light according to Claim 1, **characterized in that** the open area (5) of the closing component (3) is formed by a recess, which extends inwards from the outer edge (11) of the base component (2).

3. A light according to Claim 1, **characterized in that** the open area (5) of the closing component (3) is formed by a through opening in a lateral peripheral area (12) of the closing component (3).

4. A light according to one of Claims 1 to 3, **characterized in that** the closing component (3) has an open area (5) on each of the lateral peripheral areas lying opposite one another.

5. A light according to one of Claims I to 4, **characterized in that** the opening (17) is formed through contiguous edges (25) of the base component (2) and of the open area (5) of the closing component (3).

6. A light according to Claim 5, **characterized in that** the closing component (3) is tightly glued together with the base component (2), and the edges of the opening (17) in the base component (2) and the closing component (3) are tightly glued together with the electric supply line (16), strain-relieving means (31), which surround the supply line (16), being held tightly in the opening (17).

7. A light according to one of Claims 1 to 6, **characterized in that** the outer face of the cover (9) extends so as to lie flush with the adjacent outer face of the closing component (3).

8. A light according to one of Claims 1 to 7, **characterized in that** the retaining device (10) disposed between the cover (9) and the housing (2, 3) is at least formed by locking elements between the cover (9) and the closing component (3).

9. A light according to one of Claims 1 to 8, **characterized in that** both the closing component (3), at least in a peripheral area (12) including an open area (5), and the cover (9) are designed so as to be opaque, the closing component (3) having a transparent, technically efficient light cover (18) adjoining the opaque peripheral area (12).

10. A light with a plate-shaped base component (2) and with a carrier plate (19) for miniature light sources (1) according to one of Claims 1 to 9, **characterized in that** a portion (20) of the carrier plate (19) extends so as to lie below an opaque peripheral area (12) of the closing component (3) and is disposed at the side of an open area (5) of the closing component (3), the portion (20) of the carrier plate (19) bearing electronic components (21) for supplying voltage to the light sources (1).

11. A light according to Claim 10, **characterized in that** the electronic components (21) are disposed adjacent to the exposed area (14) of the base component (12), which has a fixing aperture (4) for fixing means (8) and a through opening (15) for an electric supply line (16).

12. A light according to Claim 10 or 11, **characterized in that** partition walls (22) are formed on the inside of the closing component (3), which run between the opaque peripheral area (12), including an open area (5), and the transparent light cover (18), and which between them define a space for accommodating an intermediate plate (23) covered with optical elements (29) and fix the carrier plate (19) of the light sources (1) to the base component (2).

## Revendications

1. Feu pour véhicules, en particulier feu arrière pour véhicules, comportant un boîtier dans lequel est agencée au moins une source lumineuse (1) et qui présente une partie de base (2) postérieure et une partie de fermeture (3) antérieure, et au moins une ouverture de fixation (4) ménagée dans la partie de base (2) pour un moyen de fixation (8) en forme de goujon, grâce auquel on peut fixer la partie de base (2) sur le véhicule, **caractérisé en ce que**
- la partie de fermeture (3) présente au moins une région ouverte (5) dont le tronçon de bord (6) s'étend à distance d'une surface d'appui (7) de la partie de base (2) servant au moyen de fixation (8) et est en appui sur la partie de base (2),
- la région ouverte (5) de la partie de fermeture (3) est fermée par un couvercle (9) un dispositif de retenue (10) détachable existant entre ce couvercle et le boîtier (2, 3),
- dans la région (14) de la partie de base (2), qui est laissée libre par la région ouverte (5) de la partie de fermeture (3), est ménagée une ouverture de passage (15) pour une ligne d'amenée électrique (16) qui, dans l'espace formé par la partie de base (2), par la partie de fermeture (3) et par le couvercle (9) mène à travers une ouverture d'entrée (17) du boîtier (2, 3) jusque dans l'intérieur du boîtier (2, 3).

2. Feu selon la revendication 1, **caractérisé en ce que** la région ouverte (5) de la partie de fermeture (3) est formée par un renfoncement qui s'étend depuis le bord extérieur (11) de la partie de base (2) vers l'intérieur.

3. Feu selon la revendication 1, **caractérisé en ce que** la région ouverte (5) de la partie de fermeture (3) est formée par une ouverture de passage dans une région de bord (12) de la partie de fermeture (3).

4. Feu selon l'une des revendications 1 à 3, **caractérisé en ce que** la partie de fermeture (3) présente une région ouverte (5) sur chacune des régions de bord (12) latérales opposées.

5. Feu selon l'une des revendications 1 à 4, **caractérisé en ce que** l'ouverture d'entrée (17) est formée par les bords (25) voisins de la partie de base (2) et de la région ouverte (5) de la partie de fermeture (3).

6. Feu selon la revendication 5, **caractérisé en ce que** la partie de fermeture (3) est collée de manière étanche à la partie de base (2) et les bords de l'ouverture d'entrée (17) de la partie de base (2) et de la partie de fermeture (3) sont collés de manière étanche avec la ligne d'amenée électrique (16), une décharge de traction (31) entourant la ligne d'amenée (16) étant retenue par blocage dans l'ouverture d'entrée (17).

7. Feu selon l'une des revendications 1 à 6, **caractérisé en ce que** le couvercle (9) s'étend avec sa surface extérieure en affleurement avec la surface extérieure adjacente de la partie de fermeture (3).

8. Feu selon l'une des revendications 1 à 7, **caractérisé en ce que** le dispositif de retenue (10) existant entre le couvercle (9) et le boîtier (2, 3) est formé au moins par des éléments d'enclenchement entre le couvercle (9) et la partie de fermeture (3).

9. Feu selon l'une des revendications 1 à 8, **caractérisé en ce qu'**aussi bien la partie de fermeture (3), au moins dans une région de bord (12) présentant une région ouverte (5), que le couvercle (9) sont réalisés opaques, la partie de fermeture (3) présentant à la limite de la région de bord (12) opaque une plaque d'éclairement (18) active du point de vue luminosité.

10. Feu comportant une partie de base (2) en forme de plaque et une plaque support (19) pour des sources lumineuses miniatures (1) selon l'une des revendications 1 à 9, **caractérisé en ce que** la plaque support (19) s'étend avec un tronçon (20) jusqu'en dessous d'une région de bord (12) réalisée opaque de la partie de fermeture (3) et est agencée latéralement à une région ouverte (5) de la partie de fermeture (3), le tronçon (20) de la plaque support (19) portant des composants électroniques (21) pour l'alimentation en courant des sources lumineuses (1).

11. Feu selon la revendication 10, **caractérisé en ce que** les composants électroniques (21) sont agencés au voisinage de la région laissée libre (14) de la partie de base (12), laquelle présente une ouverture de fixation (4) pour un moyen de fixation (8) et une ouverture de passage (15) pour une ligne d'amenée électrique (16).

12. Feu selon l'une ou l'autre des revendications 10 et 11, **caractérisé en ce que** sur la face intérieure de la partie de fermeture (3) sont formées des parois de séparation (22) qui s'étendent entre la région de bord (12) opaque présentant une région ouverte (5) et la plaque d'éclairement (18) transparente et qui délimitent entre elles un espace pour la réception d'une plaque intermédiaire (23) équipée d'éléments optiques (28) et qui retiennent la plaque support (19) des sources lumineuses (1) sur la partie de base (2).
